# EUROPÄISCHE PATENTSCHRIFT

(11) **EP 0 848 183 B1**
(45) Veröffentlichungstag und Bekanntmachung des Hinweises auf die Patenterteilung: **28.08.2002**
(21) Anmeldenummer: 97120904.4
(22) Anmeldetag: 28.11.1997
(51) Int. Cl.: F16F 13/10

(54) **Mehrkammer-Hydrauliklager**
Multi-chamber hydraulic mounting
Support hydraulique à chambres multiples

(30) Priorität: 04.12.1996 DE 19650230
(43) Veröffentlichungstag der Anmeldung: 17.06.1998
(73) Patentinhaber: ContiTech Vibration Control GmbH, 30165 Hannover (DE)
(72) Erfinder: Bebermeier, Jürgen, 30823 Garbsen (DE)
(74) Vertreter: Schneider, Egon

(56) Entgegenhaltungen:
- EP-A- 0 042 910
- GB-A- 2 237 355
- PATENT ABSTRACTS OF JAPAN vol. 013, no. 555 (M-904), 11. Dezember 1989 (1989-12-11) & JP 01 229132 A (TOKAI RUBBER IND LTD), 12. September 1989 (1989-09-12)
- PATENT ABSTRACTS OF JAPAN vol. 010, no. 307 (M-527), 18. Oktober 1986 (1986-10-18) & JP 61 119831 A (KINUGAWA RUBBER IND CO LTD), 7. Juni 1986 (1986-06-07)
- PATENT ABSTRACTS OF JAPAN vol. 010, no. 033 (M-452), 8. Februar 1986 (1986-02-08) & JP 60 188638 A (NISSAN JIDOSHA KK), 26. September 1985 (1985-09-26)

## Beschreibung

Die Erfindung geht aus von einem Mehrkammer-Hydrauliklager zur elastischen Abstützung von Aggregaten, insbesondere von Kraftfahrzeugmotoren, nach der Gattung des Patentanspruchs.

Aus der japanischen Patentschrift JP 01 229 132 A ist ein Hydrauliklager mit einer mit Hydraulikflüssigkeit gefüllten Hydraulikkammer bekannt. Die Hydraulikkammer ist in zwei Teilräume, eine Arbeitskammer und eine mit Membran abgeschlossenen Ausgleichskammer unterteilt.

Bei der Abstützung von Kraftfahrzeugmotoren dienen elastische Hydrauliklager einerseits dem Zweck, Motorschwingungen vom Chassis fernzuhalten. Andererseits sollen die von Fahrbahnunebenheiten auf das Chassis gelangenden Erschütterungen nicht zu unerwünschten Resonanzschwingungen des Motors führen.

Die Elastizität des Hydrauliklagers bildet im Zusammenwirken mit der Masse des abzustützenden Motors ein schwingungsfähiges Gebilde. Unterhalb der Eigenfrequenz bewegen sich Chassis und der abgestützte Motor mehr oder weniger konphas miteinander.

Bei Anregung der Eigenfrequenz muß eine hinreichend große Dämpfung zur Wirkung gelangen, wenn eine Resonanzüberhöhung vermieden werden soll. Bei Anregung hoher Frequenzen ergibt sich eine mehr oder weniger ausgeprägte Gegenphasigkeit, wodurch eine übertragung der Schwingungen vom Motor zum Chassis weitgehend verhindert wird.

Aus diesem Grunde erscheint es sinnvoll, eine Lagerabstimmung möglichst tieffrequent auszulegen. Eine tieffrequente Aufhängung ist aber extrem weich und dementsprechend nachgiebig, was wiederum Probleme bei der Anregung durch große Schüttelstöße und bei der Anregung im Resonanzfall mit sich bringt.

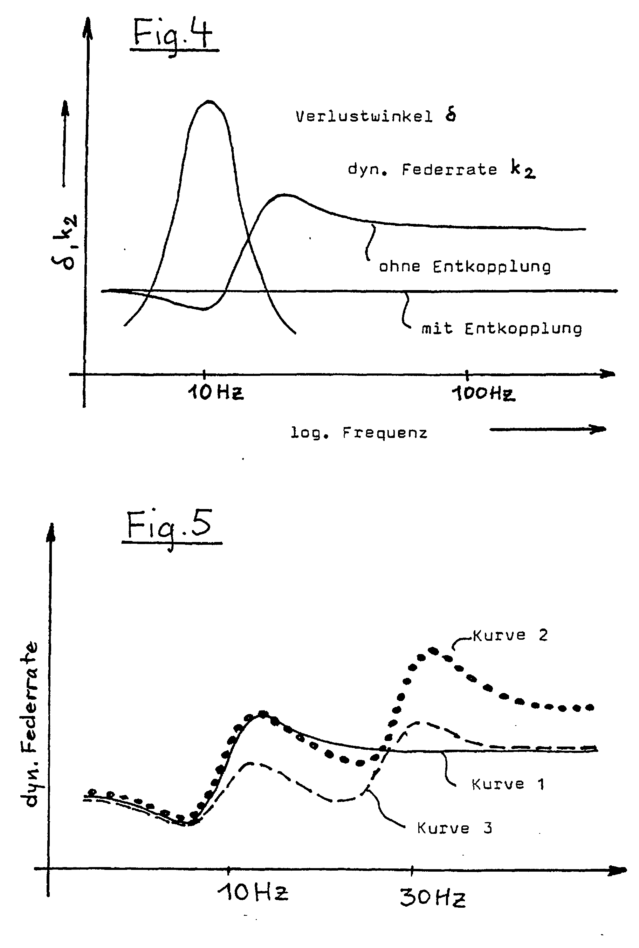

Hydraulisch gedämpfte Motorlager sind üblicherweise so ausgelegt, daß sie durch ein stark ausgeprägtes Dämpfungsmaximum und durch einen Tilgereffekt die Resonanzschwingungen des Motors in Hochrichtung (üblicherweise im Frequenzbereich 6 - 12 Hz) stark reduzieren <Fig. 4).
Bei Frequenzen oberhalb des Dämpfungsmaximums ergibt sich konstruktionsbedingt ein Anstieg der dynamischen Federrate auf ein zweites Steifigkeitsniveau. Dies gilt immer für größere Amplituden. Für kleinere Amplituden kann mit Hilfe einer Entkopplung in der Dämpfungseinrichtung erreicht werden, daß das ursprüngliche Steifigkeitsniveau bis zu hohen Frequenzen erhalten bleibt.

Der Anstieg der dynamischen Federrate wirkt sich häufig im Fahrzeug sehr negativ auf das Schwingungsverhalten des Motors im Leerlauf aus (Leerlaufschütteln).

In der Vergangenheit hat es verschiedene Ansätze gegeben, hier eine Verbesserung zu erzielen. Bekannt sind unter anderem:
- Hydrauliklager mit abschaltbarer Dämpfung. Bei abgeschalteter Dämpfung steigt die Federrate nicht auf das zweite Niveau an.
- Hydrauliklager, bei denen ein zweiter Kanal zugeschaltet werden kann. Dieser bewirkt, daß der Tilgereffekt und die Absenkung der Federrate in den Frequenzbereich des Leerlaufschüttelns verschoben wird.
- Hydrauliklager mit zwei Kanälen, die in separate Ausgleichskammern mit speziell abgestimmter Ausbeulsteifigkeit münden und eine Tilgerwirkung sowohl im niederfrequenten Bereich als auch beim Leerlaufschütteln zeigen <vergl. z. B. GB 237 355 und US 5.499.799).

Das gattungsgemäße Hydrauliklager besteht aus zahlreichen Einzelteilen. Deshalb sind Dichtheitsprobleme nicht auszuschließen. Die Aufgabe der Erfindung besteht in der Schaffung einer vereinfachten, preiswerten und zuverlässigen Konstruktion.

Die Lösung dieser Aufgabe ist mit den im Patentanspruch genannten Merkmalen gegeben. Das erfindungsgemäße Hydrauliklager zeichnet sich dadurch aus, daß das zweite Dämpfungsmaximum ohne bzw. mit geringen zusätzlichen Kosten in vorhandenen Hydrauliklager-Konstruktionen realisiert werden kann.
Die erfindungsgemäße Konstruktion verknüpft in vorteilhafter Weise die mit einem Freiweg gegebenen Eigenschaften mit dem mit einer weiteren Ausgleichskammer gegebenen zweiten Dämpfungsmaximum. Das bedeutet: Es ist ein gutes Isolationsvermögen bei kleinen Amplituden und hohen Frequenzen gewährleistet.

Das erfindungsgemäße Mehrkammer-Hydrauliklager läßt sich einfach herstellen. Verglichen mit bekannten Einkammer-Hydrauliklagern werden nur wenige zusätzliche Bauteile benötigt. Deshalb ist das Lager kostengünstig herstellbar. Der Aufbau ist kompakt und robust und damit entsprechend wenig stör- und reparaturanfällig. Die erfindungsgemäße Konstruktion basiert auf einem universellen Lagergrundkonzept. Dies ermöglicht Varianten mit einer und mit zwei Ausgleichskammern. Zu diesem Zweck wird in vorhandenen Serienlagern die konventionelle Membran gegen die erfindungsgemäße Membran mit zweiter Ausgleichskammer ausgetauscht. Eine aufwendige Neukonstruktion und neue Werkzeuge sind nicht erforderlich.

Die Drosselmembran ist in die ringförmig ausgearbeitete Drosselscheibe eingearbeitet. Ein Freiweg ergibt sich daraus, daß die zweite Ausgleichskammermembran an der Drosselmembran befestigt ist. Bei Befestigung an der Trennwand wäre keine vollständige Entkopplung möglich.

Wegen der einstückigen Ausführung von Drosselkammer und zweiter Ausgleichskammer ist eine bessere Abdichtung gegeben.

Anschließend wird die erfindungsgemäße Konstruktion anhand der beigefügten Zeichnungen näher erläutert.
Fig. 1 zeigt ein erfindungsgemäßes Mehrkammer-Hydrauliklager im Längsschnitt.
Fig. 2a und 2b zeigen verschiedene Ausführungsformen der erfindungswesentlichen Details: Drosselmembran und zweite Ausgleichskammer, ebenfalls im Längsschnitt.
Fig. 3a zeigt den prinzipiellen Aufbau eines Zweikammer-Hydrauliklagers, Fig. 3b dessen mechanisches Ersatzschaltbild.
Fig. 4 zeigt die dynamischen Kennlinien von Hydrauliklagern.
Fig. 5 stellt einen Vergleich der dynamischen Kennlinien dar.

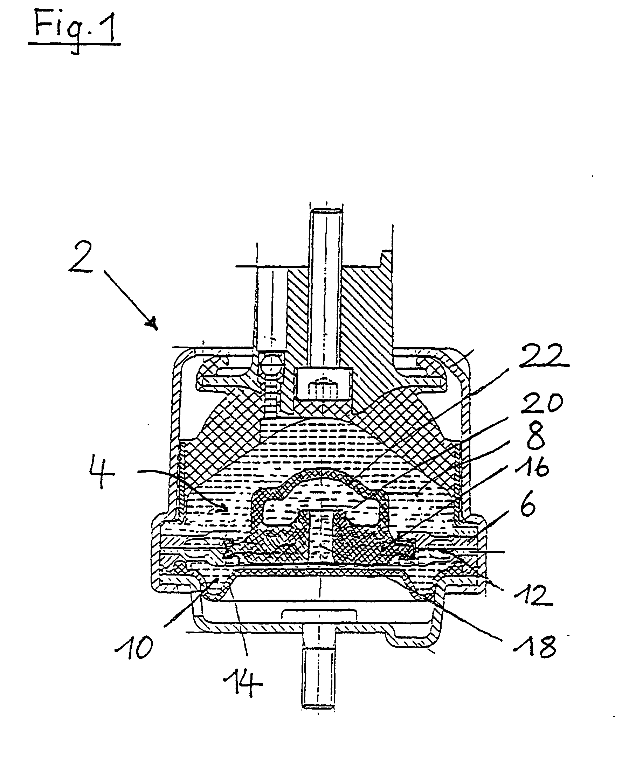

Das in Fig. 1 dargestellte erfindungsgemäße Mehrkammer-Hydrauliklager 2 besteht im wesentlichen aus einer mit Flüssigkeit gefüllten Hydraulikkammer 4, die durch eine Drosselscheibe (Trennwand) 6 in eine Arbeitskammer 8 und eine (erste) Ausgleichskammer 10 unterteilt ist. In der Drosselscheibe 6 ist ein Ringkanal 12 als eine (erste) Strömungsverbindung zwischen Arbeitskammer 8 und (erster) Ausgleichskammer 10 vorgesehen. Die Ausgleichskammer 10 ist auf seiner der Drosselscheibe 6 abgewandten Seite mit einer (ersten) Ausgleichskammer-Membran 14 abgeschlossen.

In die Drosselscheibe 6 ist eine Drosselmembran (Entkopplungsmembran) 16 eingelegt, die vorzugsweise mit einem Freiweg hin und her bewegbar ist. Die Drosselmembran 16 weist mindestens eine parallel zu dem Freiweg geschaltete, erfindungsgemäße zusätzliche Strömungsverbindung 18 auf, die zu einer weiteren (zweiten) Ausgleichskammer 20 in der Weise führt, daß die erste Ausgleichskammer 10 mit der weiteren (zweiten) Ausgleichskammer 20 über diesen zusätzlichen Strömungskanal 18 in Verbindung steht.

Die zweite Ausgleichskammer 20 ist mittels einer zweiten Ausgleichskammer-Membran 22 gegen die Arbeitskammer 8 hydraulisch abgetrennt.
Vorzugsweise bestehen die Drosselmembran 16 und die zweite Ausgleichskammer-Membran 22 aus elastomerem Material und sind als eine Einheit einstückig ausgebildet.

Die Ausbeulsteifigkeit der <zweiten> Ausgleichskammermembran 22 muß dabei deutlich über der der <ersten> Ausgleichskammer-Membran 10 des Hydrauliklagers 2 liegen, damit sich das erste Dämpfungsmaximum nicht zu stark verringert.

Der Kanal 18 in der Drosselmembran (Entkopplungsmembran) 16 kann gerade oder auch als umlaufender Ringkanal ausgebildet sein. Die Ausgleichskammer 20 für den zweiten Kanal 18 kann sich in der Ausgleichskammer 10 des Hydrauliklagers 2, aber auch in der Arbeitskammer 8 befinden. Die Entkopplungsmembran 16 mit zweitem Kanal 18 kann wie die konventionelle zur akustischen Entkopplung mit einem Freiweg oder einer speziellen Federcharakteristik ausgeführt sein.

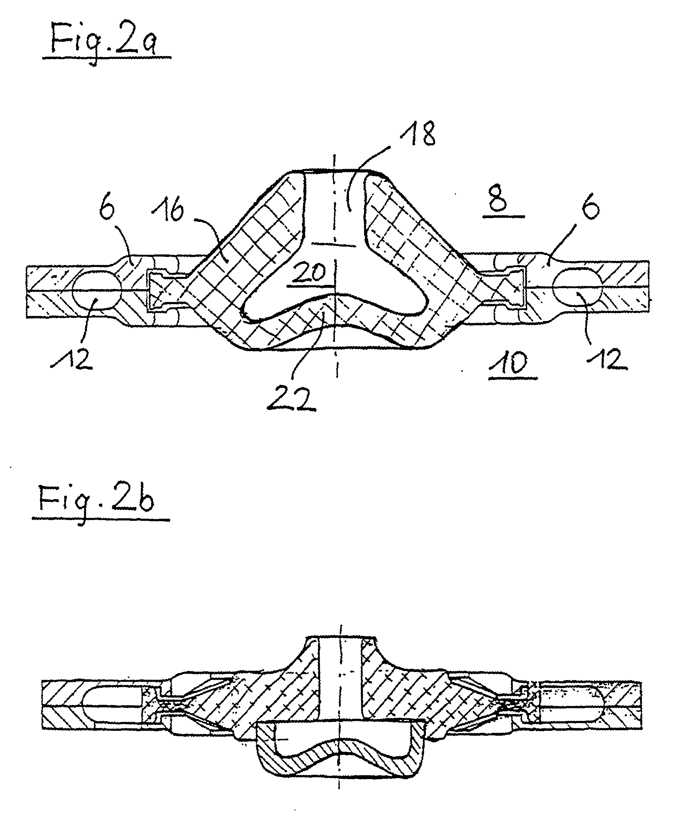

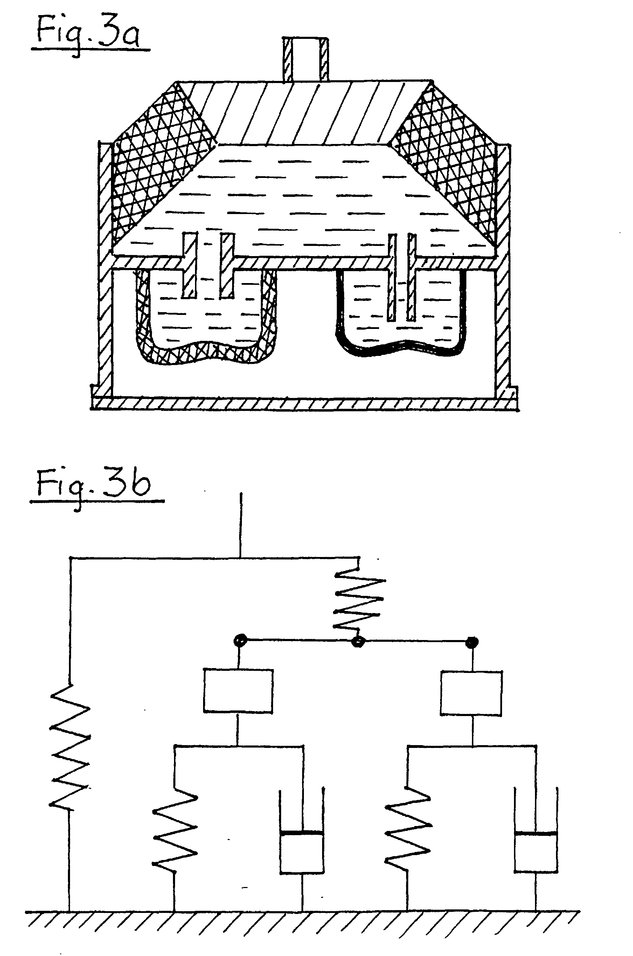

Die in den Fig. 2a und 2b dargestellten alternativen Ausführungsformen weisen eine in Richtung auf die erste Ausgleichskammer 10 angeordnete zweite Ausgleichskammer 20 auf.
In diesem Zusammenhang wird darauf hingewiesen, daß die Figuren 2a, 2b und 3a nicht sämtliche Merkmale der Erfindung zeigen.

In Fig. 5 ist der Verlauf der dynamischen Kennlinie für ein übliches Hydrauliklager dargestellt <Kurve 1). Wenn in diesem Hydrauliklager die Entkopplungsmembran durch eine Membran mit zweitem Kanal getauscht wird, ergeben sich je nach Abstimmung z. B. die Kurven 2 oder 3 für die dynamische Federrate.
Kurve 2 zeigt den Verlauf für eine hohe Ausbeulsteifigkeit der Ausgleichsmembran, Kurve 3 für eine geringere Ausbeulsteifigkeit.

### Mehrkammer-hydrauliklager Bezugszeichenliste

- 2: Mehrkammer-Hydrauliklager
- 4: Hydraulikkammer
- 6: Drosselscheibe, Trennwand
- 8: Arbeitskammer
- 10: <erste) Ausgleichskammer
- 12: Ringkanal, <erste> Strömungsverbindung, Drosselöffnung
- 14: (erste) Ausgleichskammer-Membran
- 16: Drosselmembran (Entkopplungsmembran)
- 18: zusätzliche Strömungsverbindung, Strömungskanal, zweite Drosselöffnung, zweiter Kanal
- 20: weitere <zweite) Ausgleichskammer
- 22: weitere (zweite) Ausgleichskammer-Membran

## Patentansprüche

1. Mehrkammer-Hydrauliklager (2),
zur elastischen Abstützung von Aggregaten,
insbesondere von Kraftfahrzeugmotoren,
mit einer mit Hydraulikflüssigkeit gefüllten
Hydraulikkammer (4),
welche durch eine mit einer Drosselöffnung (12) versehenen Drosselscheibe (6) in zwei Teilräume, eine Arbeitskammer (8) und eine erste Ausgleichskammer (10), unterteilt ist,
- wobei die Ausgleichskammer (10) mit einer (ersten) Ausgleichskammer-Membran (14) abgeschlossen ist, und
- wobei an den ersten (8) oder an den zweiten Teilraum (10) über eine weitere in der Drosselscheibe (6) vorgesehene zweite Drosselöffnung (18) ein weiterer Teilraum eine weitere, von einer weiteren Ausgleichskammer-Membran (22) abgeschlossene, in die Arbeitskammer (8) oder die erste Ausgleichskammer (10) hineinragende Ausgleichskammer (20) angegliedert ist,
- wobei sich die zweite Drosselöffnung (18) in einer elastischen und/oder einen axialen Freiweg aufweisenden Drosselmembran (16) befindet, und
- wobei die Drosselmembran (16) in die ringförmig ausgebildete Drosselscheibe (6) eingearbeitet ist,
**dadurch gekennzeichnet,**
**daß** die Drosselmembran (16) und die weitere Ausgleichskammer-Membran (22) aus elastomerem Material einstückig hergestellt sind.

## Claims

1. Multi-chamber hydraulic bearing (2) for the resilient support of assemblies, more especially of automotive vehicle engines, said bearing having an hydraulic chamber (4) which is filled with hydraulic fluid and is divided, by a baffle (6) provided with a shut-off aperture (12), into two partial chambers, a working chamber (8) and a first equalising chamber (10),
- the equalising chamber (10) being closed with a (first) equalising chamber diaphragm (14), and
- an additional partial chamber, an additional equalising chamber (20) which is closed by an additional equalising chamber diaphragm (22) and protrudes into the working chamber (8) or into the first equalising chamber (10), being attached to the first partial chamber (8) or to the second partial chamber (10) via an additional second shut-off aperture (18) provided in the baffle (6),
- the second shut-off aperture (18) being situated in a shut-off diaphragm (16), which is resilient and/or has an axial freeway, and
- the shut-off diaphragm (16) being incorporated in the annularly configured baffle (6),
**characterised in that** the shut-off diaphragm (16) and the additional equalising chamber diaphragm (22) are produced in a single piece from an elastomeric material.

## Revendications

1. Support hydraulique (2) à plusieurs chambres servant d'appui élastique de groupes assemblés, en particulier de moteurs de véhicules automobiles, comprenant une chambre hydraulique (4) remplie d'un liquide hydraulique, laquelle chambre hydraulique est divisée, par une chicane (6) dotée d'un orifice d'étranglement (12), en deux espaces partiels, à savoir une chambre de travail (8) et une première chambre d'équilibrage (10),
- où la chambre d'équilibrage (10) est fermée par un (premier) diaphragme (14) de chambre d'équilibrage, et
- où un autre espace partiel, à savoir une autre chambre d'équilibrage (20) pénétrant dans la chambre de travail (8) ou dans la première chambre d'équilibrage (10), fermée par un autre diaphragme (22) de chambre d'équilibrage, est reliée, par un autre second orifice d'étranglement (18) prévu dans la chicane (6), au premier (8) ou au second espace partiel (10),
- où le second orifice d'étranglement (18) se trouve dans un diaphragme (16) comprenant un passage libre élastique et/ou axial, et
- où le diaphragme (16) est inséré dans la chicane (6) conçue de forme annulaire,
**caractérisé**
**en ce que** le diaphragme (16) et le diaphragme (22) de chambre d'équilibrage sont fabriqués en formant une seule pièce en élastomère.
